# EUROPÄISCHE PATENTSCHRIFT

(11) **EP 0 503 509 B1**
(45) Veröffentlichungstag und Bekanntmachung des Hinweises auf die Patenterteilung: **26.07.1995**
(21) Anmeldenummer: 92103905.3
(22) Anmeldetag: 06.03.1992
(51) Int. Cl.: B23H 7/06

(54) **Drahterodierverfahren**
Electro-erosion wire cutting method
Méthode de coupe par fil électro-érosif

(30) Priorität: 08.03.1991 DE 4107527
(43) Veröffentlichungstag der Anmeldung: 16.09.1992
(73) Patentinhaber: GAESE, Martin, D-42857 Remscheid (DE)
(72) Erfinder: GAESE, Martin, D-42857 Remscheid (DE)
(74) Vertreter: KUHNEN, WACKER & PARTNER

(56) Entgegenhaltungen:
- EP-A- 0 059 639
- DE-A- 2 144 085
- PATENT ABSTRACTS OF JAPAN vol. 10, no. 227 (M-505)(2283) 7. August 1986 & JP-A-61 061 718 (INST. TEC PRECISION ENG) 29 März 1986

## Beschreibung

Die Erfindung betrifft ein Drahterodierverfahren zum Heraustrennen eines Formteils aus einem großeren Teil mittels eines in zwei Schritten durchgeführten Schnittvorgangs, bei dem die Außenkontur des Formteils durch mehrere geometrische Konturelemente bestimmt ist und der Erodierdraht von einem mit Abstand zur Formteil-Außenkontur liegenden Startpunkt auf diese eingefahren wird.

Bei einem derartigen herkömmlichen Verfahren wird das Formteil, das beispielsweise ein Werkstück wie etwa ein Stempel sein kann, aus einem größeren Rohteil herausgeschnitten, und zwar unter Einsatz eines entlang der gewünschten Formteil-Außenkontur geführten Drahts, zwischen dem und dem Rohteil eine elektrische Spannung zur Schneidenergieerzeugung angelegt ist. Um das Formteil aus dem Rohteil herauszuschneiden, wird der Schnittvorgang üblicherweise in zwei Schritten durchgeführt, wobei zunächst in einem Vollschnitt der größere Teil der Formteil-Außenkontur herausgeschnitten und der hierbei verbleibende Stegbereich zwischen Formteil und Rohteil in einem abschließenden Trennschnitt entfernt wird. Sowohl der Vollschnitt als auch der Trennschnitt werden vorzugsweise jeweils mehrfach durchgeführt. Hierbei tritt allerdings regelmäßig der Nachteil auf, daß die Außenkontur des Formteils im Bereich des Vollschnitts nicht vollständig mit der im Bereich des Trennschnitts übereinstimmt, so daß eine Anbindung im Bereich des Trennschnitts verbleibt. Diese Anbindung, die sich als mehr oder weniger deutliche Abweichung des Ist-Konturverlaufs vom Soll-Konturverlauf im Bereich des Trennschnitts bemerkbar macht, muß in anschließenden Arbeitsvorgängen durch Materialabtragung entfernt werden, bis das Sollmaß erreicht ist. Diese zusätzlichen Arbeitsvorgänge, die mit hoher Präzision durchgeführt werden müssen und zudem oftmals auch große Bearbeitungsprobleme aufwerfen, vergrößern allerdings den Zeit- und Kostenaufwand für die Herstellung des Formteils deutlich, insbesondere wenn enge Herstellungstoleranzen gefordert sind. Zudem läßt sich bei sehr kleinen Werkstücken eine solche Nachbearbeitung nicht oder nur mit sehr großen Schwierigkeiten durchführen.

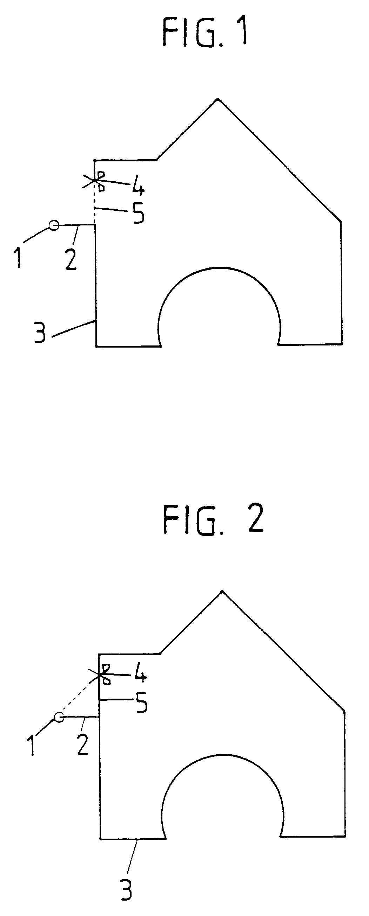

Im folgenden soll ein herkömmliches Drahterodierverfahren zur näheren Veranschaulichung seines Ablaufs und der hierbei auftretenden Probleme unter Bezugnahme auf die Figuren 1 und 2 näher erläutert werden. In Figur 1 ist schematisch der Schnittverlauf des Vollschnitts eines herzustellenden Stempels dargestellt, wobei der Schnitt von einem Startpunkt 1 beginnt und entlang einer Linie 2 bis zur Außenkontur des herzustellenden Formteils verläuft. Entlang der Schnittlinie 3 verläuft der Vollschnitt dann entsprechend der gewünschten Außenkontur des Formteils bis zu einem Konturendpunkt 4, an dem der Schnitt beendet und regelmäßig der nicht dargestellte Erodierdraht geschnitten wird. Anschließend wird der Bearbeitungskopf wieder über den Startpunkt 1 gefahren, der Erodierdraht durchgefädelt und dann der Vollschnitt entlang den Linien 2 und 3 bis zum Konturendpunkt 4 wiederholt. Dieser Vollschnitt wird solange durchgeführt, bis die gewünschte Genauigkeit der Außenkontur im Bereich des Vollschnitts erreicht ist.

Nach Beendigung des Vollschnitts werden auf die geschnittenen Bereiche an etlichen Stellen Klebepunkte aufgebracht, die eine mechanische Fixierung des Formteils mit den außenliegenden Substratteilen bewirken. Ferner wird die elektrische Kontaktierung des Formteils sichergestellt. Hierzu kann z.B. elektrisch leitfähiges Klebematerial verwendet werden. Beim nachfolgenden Trennschnitt wird der bislang verbliebene Steg zwischen Substrat und Formteil durchtrennt. Hierzu wird der Erodierdraht wieder durch den Startpunkt 1 eingefädelt und entlang der Linie 2 bis zur Außenkontur bewegt. Nach Erreichen der Außenkontur wird der Schneiddraht nun aber entgegen der bisherigen Richtung nach oben zum Konturendpunkt 4 gefahren und schneidet damit entlang der Linie 5. Ein Herausfallen des nun voll vom Substrat abgetrennten Formteils wird durch die aufgebrachten Klebepunkte vermieden, die auch die elektrische Kontaktierung gewährleisten. Im Konturendpunkt 4 wird der Draht dann erneut geschnitten und der Trennschnitt durch Zurückfahren zum Startpunkt 1 und erneutem Durchfahren der Linien 2 und 5 mehrfach wiederholt. Wie bereits ausgeführt, treten bei dieser Vorgehensweise aber Probleme dahingehend auf, daß im Bereich der Linie 5 die Außenkontur des Formteils nicht exakt mit dem durch den Vollschnitt bewirkten Außenkonturverlauf übereinstimmt, so daß in diesem Bereich eine Anbindung, d.h. ein Grat, verbleibt.

Aus der DE-A 21 44 085 ist ein Drahterodierverfahren zur Herstellung von Formkörpern bekannt, bei dem die Formkörper mit hintersetzten Flanken hergestellt werden sollen. Um dies zu erreichen, wird entweder der Drahtelektrode eine kegelförmige Bewegung aufgezwungen oder die Drahtelektrode sukzessiv schräg gestellt. Dieser Druckschrift ist nicht entnehmbar, daß der Schnittvorgang in zwei Abschnitten mit Vollschnitt und nachfolgendem Trennschnitt durchgeführt würde.

Der Erfindung liegt die Aufgabe zugrunde, ein gattungsgemäßes Drahterodierverfahren derart auszugestalten, daß mit geringem Aufwand ein sehr präziser Außenkonturverlauf erreicht wird.

Diese Aufgabe wird mit den im Patentanspruch 1 genannten Maßnahmen gelöst. Vorteilhafte Ausgestaltungen der Erfindung sind in den Unteransprüchen angegeben.

Bei dem erfindungsgemäßen Drahterodierverfahren wird somit auf einen Übergangspunkt zwischen zwei der die Formteil-Außenkontur bestimmenden geometrischen Konturelemente eingefahren und an einem anderen Konturübergangspunkt wieder ausgefahren. Der Übergangspunkt kann beispielsweise der Schnittpunkt zwischen in unterschiedlichen Richtungen verlaufenden Geraden, der Übergangspunkt zwischen Gerade und Radius oder der Übergangspunkt zwischen zwei unterschiedlich großen Radien sein.

Es hat sich überraschend gezeigt, daß sich durch diese Maßnahme, den Anfangs- und Endkonturpunkt auf den Übergangspunkt zwischen zwei Konturelementen zu wählen, das Auftreten von Anbindungen überraschend drastisch reduzieren bis gänzlich vermeiden läßt. Dies liegt wahrscheinlich darin begründet, daß nun aufgrund des im Bereich des Konturübergangspunkts vorhandenen Schnittrichtungswechsels der Trennschnitt - nach Ausführung des Vollschnitts - exakt in derselben Soll-Lage wie der vorherige Vollschnitt begonnen werden kann und folglich keinerlei Toleranzabweichung vorliegt. Mit dem erfindungsgemäßen Verfahren lassen sich Formteile mit einer äußerst hohen Genauigkeit auch im Bereich des Trennschnitts herstellen, bei denen die Anbindungen auf Werte bis auf ca. 3 »m und darunter verringert sind, ohne daß irgendwelche zusätzlichen Nachbehandlungen wie etwa Schleifen und Polieren erforderlich sind. Damit lassen sich hochpräzise Formteile mit geringem Aufwand und äußerst rasch und folglich auch kostengünstig herstellen. Insbesondere wird durch die Erfindung auch kein zusätzlicher Aufwand gefordert, da lediglich benutzerseitig der Anfangskonturpunkt geeignet auf einen Konturübergangspunkt festgelegt werden muß.

Da auch der Konturendpunkt, bei dem der Vollschnitt beendet wird, bei einem Übergangspunkt zwischen zwei Konturelementen liegt ist sichergestellt, daß der Schneiddraht an einer "Unstetigkeit" der Formteil-Außenkontur aus dieser herausgeführt wird, so daß Vollschnitt und Trennschnitt sich in ein- und demselben Austrittspunkt treffen und damit auch in diesem Bereich Abweichungen der Außenkontur vom Sollverlauf zuverlässig vermieden werden.

Von Vorteil ist es, nicht nur den Startpunkt, sondern auch den Endpunkt, bei denen die jeweilige Schneidbewegung eingeleitet bzw. beendet wird, außerhalb der Formteil-Außenkonturlinie zu wählen. Hierdurch werden alle eventuellen ungünstigen Auswirkungen beim Bewegungsbeginn bzw. Bewegungsende des Schneiddrahts, die die Schnittqualität und die Schnittposition negativ beeinflussen könnten, in Bereiche außerhalb der Außenkontur verlegt, so daß der Außenkonturverlauf in seiner Schnittgenauigkeit nicht beeinträchtigt wird.

Insbesondere bei rechtwinkligem Ein- und Ausfahren des Schneiddrahts auf bzw. von der Formteil-Außenkontur wird die Schnittlänge außerhalb der Außenkontur auf ein Minimum verringert, da auf kürzestem Wege zur Außenkontur gefahren bzw. von dieser fortbewegt wird.

Durch Bewegung entlang einer mehrfach abknickenden Bahn außerhalb des Außenkonturverlaufs wird der Erodierdraht samt seiner zugehörigen Halterung schon bei seiner Zustellbewegung zur Außenkontur in unterschiedlichen Koordinatenrichtungen geführt, so daß eventuelle Positionierungenauigkeiten aufgrund der Neueinfädelung des Erodierdrahts oder dergleichen schon bei diesen ersten rechtwinkligen Richtungsumsteuerungen außerhalb der zu schneidenden Außenkontur ausgemerzt werden können und sich folglich nicht auf das aktuelle Schneiden der Außenkontur durchschlagen.

Wenn das zu schneidende Formteil durch mehrfache Wiederholung des Schnitts aus dem größeren Substrat herausgeschnitten wird, insbesondere bei mehrfacher Wiederholung zunächst des Vollschnitts und anschließend mehrfacher Wiederholung des Trennschnitts, erfolgt üblicherweise beim aufeinanderfolgenden Durchfahren des Vollschnitts und/oder des Trennschnitts zwischen den einzelnen Schneidvorgängen jeweils eine Feinkorrektur, bei der die Schneidbahn um ein geringes Mass in Richtung engerer Außenkonturkurve verlagert wird, so daß jeweils sukzessiv, nach dem ersten Schnitt, sehr schmale Schichten der Außenkontur mit hoher Präzision bei den nachfolgenden Schnittwiederholungen abgetragen werden. Hierbei hat es sich als sehr vorteilhaft herausgestellt, diese Schnittbahn-Feinkorrektur an einem Punkt außerhalb der Außenkontur durchzuführen, so daß die bei der Feinkorrektur auftretenden Erodierdrahtbewegungen keinerlei Auswirkungen auf die Außenkontur haben. Der Erodierdraht läuft nach Durchführung der Feinkorrektur dann exakt auf der neuen Sollbahn in die Außenkontur ein und schneidet diese entsprechend der nunmehrigen Vorgabe im Sinne einer Nachbearbeitung mit höchster Genauigkeit. Speziell bei mehrfach abgeknickter Bewegungsbahn des Schneiddrahts zur Außenkontur ist es bevorzugt, den Bahnkorrekturpunkt, bei dem die Feinkorrektur durchgeführt wird, beim letzten Bahnknick vor Erreichen der Außenkontur durchzuführen. Dies bringt den Vorteil, daß zwischen dem Startpunkt des Schneiddrahts und diesem Feinbahnkorrekturpunkt zunächst, nach dem ersten Schnitt, keine weitere Materialabtragung erforderlich ist, so daß der Energiebedarf bis zum Erreichen des Bahnkorrekturpunkts stark verringert ist. Zudem kann der Schneiddraht bis zum Bahnkorrekturpunkt vorzugsweise mit höherer Geschwindigkeit bewegt werden, was die gesamte Verfahrensdauer verkürzt.

Die Verfahrensdauer kann noch weiter verringert werden, wenn auch beim Ausfahren des Schnittdrahts aus der Außenkontur auf höhere Bewegungsgeschwindigkeit ausgeschaltet wird, wobei vorzugsweise dann gleichfalls wieder auf die bereits zuvor geschnittene Schnittbahn übergegangen wird, d.h. der Bewegungshub außerhalb der Außenkontur zumindest teilweise ohne Schneidvorgang erfolgt. Hierbei ist es gleichfalls von Vorteil, wenn auch beim Ausfahren eine abknickende Bewegungsbahn durchfahren wird. In diesem Fall kann der Umschaltpunkt von niedrigerer auf höhere Geschwindigkeit sowie gegebenenfalls auch die Bahnkorrektur - zum Einschwenken auf die bereits geschnittene Bahn - an dem der Außenkontur am nächsten benachbarten Knickpunkt der Bewegungsbahn durchgeführt werden. Selbstverständlich ist es aber auch möglich, umittelbar nach Ausfahren aus der Außenkontur die Bewegungsgeschwindigkeit und/oder die Soll-Bewegungsbahn zu verändern, ohne daß die Soll-Bewegungsbahn abgeknickt ist. In gleicher Weise kann selbstverständlich auch beim Einfahren des Schneiddrahts auf die Außenkontur die Bewegungsgeschwindigkeits- und/oder Schnittbahnkorrektur in einem geradlinigen Abschnitt der Bewegungsbahn erfolgen, auch wenn die zuvor genannte Variante bevorzugt ist.

Durch die erfindungsgemäße Festlegung des Anfangs- und auch des Endkonturpunkts auf Übergangspunkte zwischen zwei Konturelementen wird somit die bei herkömmlicher Verfahrensführung auftretende sichtbare und meßbare Anbindung ohne weiteres vermieden. Der Außenkonturunterschied zwischen Vollschnitt-Außenkontur und Trennschnitt-Außenkontur beträgt beim erfindungsgemäßen Verfahren beispielsweise nur 3 »m oder weniger, d.h. erfüllt höchste Genauigkeitstoleranzen ohne Notwendigkeit einer sonstigen Nachbearbeitung. Dies ist insbesondere auch bei kleinsten Werkstücken von hoher Bedeutung, da solche in der Regel nicht mehr nachgearbeitet werden können. Die erfindungsgemäß erzielbare hohe Genauigkeit erlaubt somit auch solche kleinsten Werkstücke mit einer Präzision herzustellen, die bislang nicht erreichbar war. Desgleichen entfällt auch bei größeren Werkstücken die sonst erforderliche Nachbearbeitung, die zudem bei herkömmlichen Bearbeitungsverfahren möglicherweise auch nicht immer mit der erforderlichen Oberflächengüte und Toleranz durchgeführt werden konnte und hohen Bearbeitungsaufwand erforderte. Die nach dem erfindungsgemäßen Verfahren erodierten Werkstücke erfordern demgegenüber im Bereich der Anbindung keinerlei Nachbearbeitung, d.h. sind insoweit einbaufertig. Dadurch werden erhebliche Lohn- und Maschinenkosten in der Höhe von z.B. 40 % eingespart. Das erfindungsgemäße Verfahren läßt sich auf allen Erodiermaschinen anwenden und bringt insbesondere bei Erodiermaschinen mit hoher Bearbeitungsgenauigkeit alle Vorteile in vollem Umfang zur Geltung. Hierbei können alle leitenden Werkstoffe unabhängig von ihrer Härte und Beschaffenheit bearbeitet werden.

Die Erfindung wird nachstehend anhand eines Ausführungsbeispiels unter Bezugnahme auf die Zeichnungen näher beschrieben. Es zeigen:
- Figuren 1 und 2: den zuvor bereits beschriebenen Schnittverlauf bei einem herkömmlichen Drahterodierverfahren,
- Figur 3: die Außenkontur des zu schneidenden Formteils einschließlich der diese erzeugenden Konturelemente,
- Figur 4: den Schnittbahnverlauf des anfänglichen Vollschnitts und
- Figur 5: den Schnittbahnverlauf beim nachfolgenden Trennschnitt.

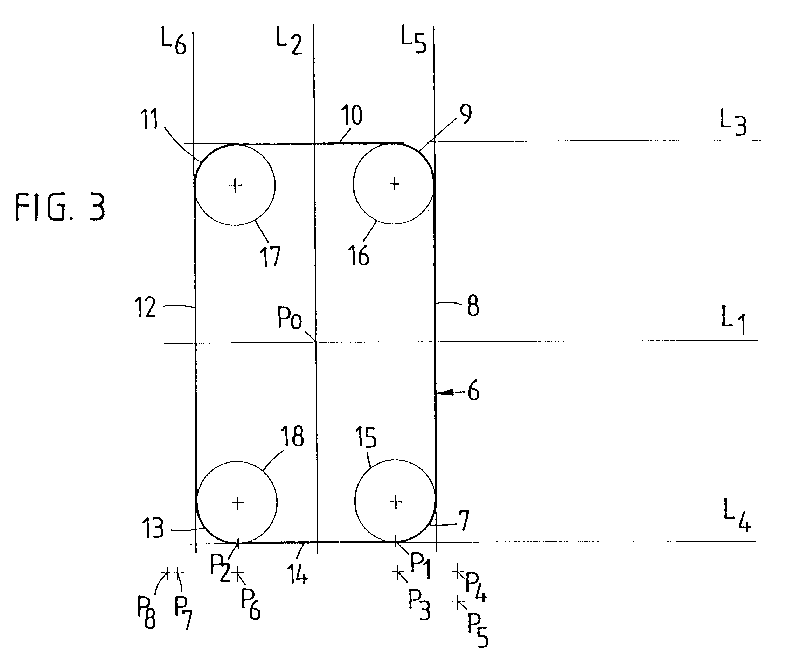

In Figur 3 ist der Außenkonturverlauf eines als Beispiel dienenden, aus einem größeren Substrat herauszuschneidenden Formteils einschließlich der ihn bildenden geometrischen Konturelemente veranschaulicht. Die Außenkontur des zu schneidenden Formteils ist mit dem Bezugszeichen 6 bezeichnet und setzt sich aus kreisförmig gekrümmten Abschnitten 7, 9, 11 und 13 sowie zwischen diesen kreisförmig gekrümmten Abschnitten liegenden geradlinigen Abschnitten 8, 10, 12 und 14 zusammen. Die kreisförmig gekrümmten Abschnitte 7, 9, 11 und 13 entsprechen Viertelkreis-Segmenten von Kreisen 15, 16, 17 bzw. 18.

Um den Schnittverlauf programmieren zu können, werden zunächst die Lage und Richtung der geradlinigen Abschnitte 8, 10, 12 und 14 sowie der Krümmungsradius und die Mittelpunktslage der kreisförmig gekrümmten Abschnitte 7, 9, 11 und 13 erfaßt, und zwar bezogen auf einen Mittelpunkt P₀, der durch den Schnittpunkt zweier in X- bzw. Y-Richtung verlaufender Linien L₁ und L₂ definiert ist. Die geradlinigen Abschnitte 10 und 14 verlaufen entlang paralleler Linien L₃, L₄, während die parallelen Abschnitte 8, 12 rechtwinklig hierzu entlang paralleler Linien L₅ und L₆ verlaufen. Für die geradlinigen Abschnitte 8 und 12 werden die X-Koordinatenwerte 6,0 bzw. - 6,0, die Y-Koordinatenwerte 0 und die Winkel-Werte 90° eingegeben, während für die geradlinigen Abschnitte 10 und 14 die X-Koordinatenwerte 0, die Y-Koordinatenwerte 10 bzw. - 10 und die Winkel-Werte 0° eingegeben werden. Zur Bestimmung der Lage und Krümmung der kreisförmigen Abschnitte 7, 9, 11 und 13 wird jeweils die Mittelpunktslage sowie der Radius der Kreise 15 bis 18 eingegeben, und zwar mit den jeweiligen X-Koordinatenwerten 4,0; - 4,0; - 4,0 bzw. 4,0, mit den Y-Koordinatenwerten 8,0; 8,0; - 8,0 bzw. - 8,0 und dem übereinstimmenden Radius-Wert 2,0.

Durch Eingabe dieser Werte ist der Außenkonturverlauf vollständig definiert, wobei das Schnitt-Programm jeweils am Berührungspunkt zweier aneinander angrenzender Konturelemente auf das jeweils nachfolgende Konturelement umschaltet. Die Lage und das Aussehen der geometrischen Konturelemente ist hierbei selbstverständlich jeweils vom Außenkonturverlauf abhängig. Als Konturelemente kommen natürlich auch andere Formen wie etwa Ellipsen, Parabeln und dergleichen in Betracht.

Um den Schnittverlauf vollständig programmieren zu können, werden zusätzlich zur Festlegung der Lage und Gestalt der die zu schneidende Außenkontur definierenden Konturelemente L3 bis L6 und 15 bis 18 zusätzliche Punkte definiert, entlang derer der Erodierdraht zu führen ist. Im einzelnen sind dies die in Figur 3 gezeigten Punkte P₁ bis P₇, wobei dem Punkt P₈ lediglich Hilfsfunktion zukommt und dieser bei einigen Programmier-Arbeitsplätzen auch entfallen kann. Der Punkt P₁ stellt denjenigen Punkt dar, bei dem der Erodierdraht (Schneiddraht) von außen auf die Außenkontur 6 zubewegt wird und in diese eintritt, d.h. bildet den Anfangskonturpunkt. Wie aus Figur 3 ersichtlich ist, ist der Anfangskonturpunkt P₁ exakt auf den Übergangspunkt zwischen den beiden Konturelementen L₄ und 15, d.h. auf den Übergangspunkt zwischen dem geradlinigen Abschnitt 14 und dem kreisförmig gekrümmten Abschnitt 7, festgelegt. Der Punkt P₅ bildet den Startpunkt, bei dem der Erodierdraht eingefädelt wird, wonach dieser geradlinig vom Punkt P₅ bis zum Punkt P₄ geführt und dann unter rechtwinkliger Abknickung bis zum Punkt P₃ und von diesem nach nochmaligem rechtwinkligen Abknicken bis zum Anfangskonturpunkt P₁ bewegt wird.

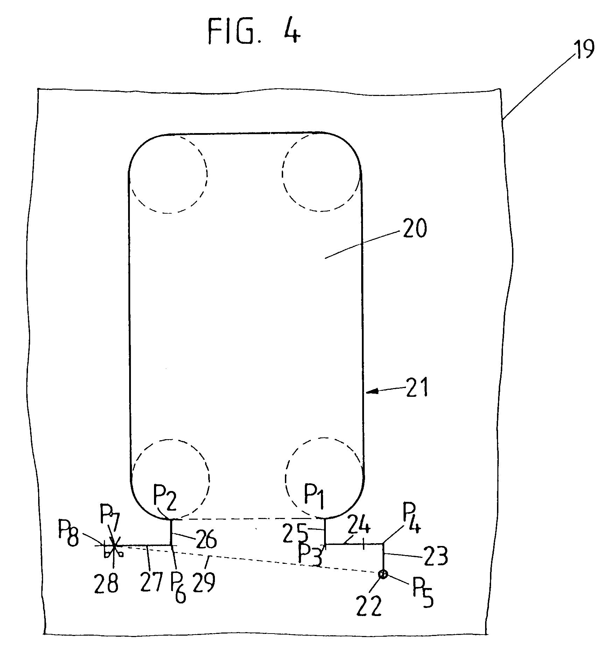

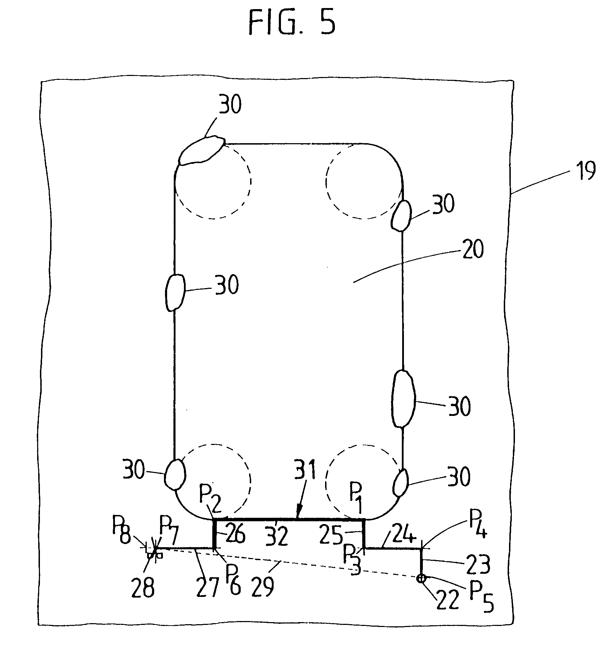

Der Punkt P₂ bildet den Konturendpunkt, bei dem der Schneiddraht nach seiner Schneidbewegung entlang der Außenkonturlinie aus dieser herausbewegt wird und dann geradlinig zunächst zum Punkt P₆ und danach unter rechtwinkligem Abknicken bis zum Punkt P₇ geführt wird. Die Schneiddrahtbewegung wird im folgenden anhand der Figuren 4 und 5 noch näher beschrieben.

Die Koordinaten der Punkte P₁ bis P₈ haben, bezogen auf die zuvor anhand Figur 3 angegebenen Koordinatenwerte der Linien und Kreise, die folgenden Größen: P₁ (4,0, - 10,0); P₂ (- 4,0, - 10,0); P₃ (4,0, - 11,5); P₄ (7,0, - 11,5); P₅ (7,0, - 13,0); P₆ (- 4,0, - 11,5); P₇ (- 7,0, - 11,5) und P₈ (- 7,5, - 11,5).

In Figur 4 ist das größere Substrat bzw. Rohteil 19 gezeigt, aus dem das Formteil 20 herausgeschnitten werden soll. Der Schneidvorgang erfolgt dergestalt, daß zunächst, vorzugsweise unter mehrfacher Wiederholung, ein Vollschnitt 21 ausgehend vom Punkt P₅ bis zum Punkt P₇ gefahren wird. Am Punkt P₅ ist ein Startloch 22 im Substrat 19 eingebracht, und zwar üblicherweise in Form einer Durchgangsbohrung. In diesem Bereich wird der Schneiddraht durch das Substrat durchgefädelt und durch die Erodiermaschine ober- und unterseitig des Substrats 19 gespannt gehalten. Die Drahtorientierung verläuft regelmäßig vertikal, kann jedoch gegenüber der Vertikalen auch geneigt sein, wenn die Außenkonturkante des zu schneidenden Werkstücks bzw. Formteils 20 schräg zur Formteil-Oberfläche verlaufen soll. Der unter mechanischer Spannung gehaltene Schneiddraht wird durch einen Generator mit vorgewählter Spannung bzw. Stromstärke gespeist und entsprechend vorgewählten Schnittwerten (Vorschubgeschwindigkeit und dergleichen) vorwärtsbewegt. Die erforderlichen Werte werden vorzugsweise aus einer Tabelle entnommen.

Der Schneiddraht wird zunächst geradlinig entlang einer Linie 23 bis zum Punkt P₄ und dann im rechten Winkel hierzu entlang einer Linie 24 bis zum Punkt P₃ geführt. Am Punkt P₃ kann der Schneiddraht kurzzeitig angehalten werden, um eine Korrektur der elektrischen Erregung und der Schnittwerte sowie der Drahtpositionierung zu ermöglichen. Beim ersten Durchgang findet hierbei aber vorzugsweise noch keine Korrektur statt. Der Schneiddraht wird dann entlang der Linie 25 bis zum Anfangskonturpunkt P1 geführt und trifft dort die Außenkontur des Formteils 20 im wesentlichen rechtwinklig, wonach er entlang der Abschnitte 7 bis 13 (Figur 3) geführt wird und diese Abschnitte der Außenkontur des Formteils 20 schneidet.

Beim Konturendpunkt P₂ wird der Schneiddraht entlang einer Linie 26 bis zum Punkt P₆ und dann im rechten Winkel zur bisherigen Vorschubrichtung entlang einer Linie 27 bis zum Punkt P₇ geführt. Der Punkt P₇ ist der Endpunkt der gesamten Schnittlinie. Im Punkt P₇ wird der Draht geschnitten, wie mit dem Symbol 28 veranschaulicht, wonach die Drahtführungsteile der Erodiermaschine entlang einer Linie 29 bis zum Startpunkt P₅ bewegt werden, gegebenenfalls unter vorherigem Anfahren des Punkts P₈. Im Startpunkt P₅ wird der Draht dann erneut durch das Startloch 22 durchgefädelt, gespannt und elektrisch erregt, wobei die elektrische Erregung vorzugsweise dieselbe wie bei der ersten schnittbewegung ist. Alternativ ist es aber auch möglich, bei umsteuerbaren Erodiermaschinen den Draht nicht im Punkt P₇ zu schneiden und zum Startpunkt P₅ zurückzubewegen, sondern vielmehr unter Umkehrung der Bewegungsrichtung den Draht entlang der Linien 27 und 26 bis zum Konturentpunkt P₂ zurückzufahren und dann entlang der Außenkontur des Formteils 20 bis zum Anfangskonturpunkt P₁ zu bewegen, wonach der Draht entlang der Linie 25 wieder bis zum Punkt P₃ und vorzugsweise weiter bis zu den Punkten P₄ und P₅ zurückgeführt wird. Danach kann der Draht unter Umkehrung der Bewegungsrichtung wieder in derselben Richtung wie bei der ersten Schnittbewegung geführt werden. Bei einem solchen hin- und hergehenden Schnitt werden die Werte für die elektrische Erregung sowie für die Feinpositionierung des Drahts vorzugsweise jeweils in den Punkten P₃ und P₆ geändert.

Wenn der Draht jedoch im Punkt P₇ geschnitten und der Erodiermaschinenkopf entlang der Linie 29 bis zum Startpunkt P₅ zurückgeführt wird, wird der Schneiddraht durch das Startloch 22 durchgefädelt und dann vorzugsweise mit derselben Erregung und denselben Schnittwerten wie zuvor bei der Bewegung entlang der Linien 23 und 24 bis zum Punkt P₃ gefahren. Hierbei ergibt sich hohe Vorschubgeschwindigkeit. Im Punkt P₃ werden die Erregungswerte dann für den zweiten Schnittdurchgang korrigiert und auch die Feinpositionierung des Drahts geändert, wobei dieser eine gewisse Einstellbewegung durchführt. Mit diesen geänderten Parametern wird der Draht dann entlang der Linie 25 und weiter vom Anfangskonturpunkt P₁ über den Konturendpunkt P₂ - entlang der Formteil-Außenkontur - bis zum Punkt P₇ geführt. Danach wird der Draht erneut geschnitten und der Erodiermaschinenkopf zum Punkt P₅ zurückgefahren. Diese Schnittbewegung kann entsprechend der geforderten Güte mehrfach wiederholt werden, wobei jeweils im Punkt P₃ die Erregungs- und Schnittgütenparameter geändert werden und die Außenkontur dann mit diesen geänderten Parametern geschnitten wird. Um Zeit zu sparen, erfolgt die Bewegung vom Punkt P₇ bis zum Punkt P₅ vorzugsweise sehr rasch in einer Eilbewegung. Während dieser Bewegung findet kein Schnittvorgang statt. Der Punkt P₈ dient hierbei lediglich als Referenzpunkt nach Bewegung des Drahts zur Position P₇ und kann bei manchen Erodiermaschinen und Programmierplätzen auch entfallen.

Die Bahn- und Ansteuerungskorrektur kann natürlich auch im Punkt P₅ oder einem anderen geeigneten Punkt erfolgen.

Während der - gegebenenfalls mehrfachen - Durchfahrung des Vollschnitts 21 erfolgt die mechanische Halterung und elektrische Kontaktierung des Formteils 20 über das elektrisch kontaktierte Substrat 19, mit dem das Formteil 20 durch den Steg zwischen den Punkten P₁ und P₂ mechanisch und elektrisch verbunden bleibt. Selbstverständlich können die Anfangs- und Endkonturpunkte P₁ und P₂ auch auf andere Konturübergangspunkte zwischen den einzelnen Konturelementen, beispielsweise auf die Übergänge zwischen dem Kreis 15 und der Linie L₅ bzw. dem Kreis 18 und der Linie L₆ gewählt werden. Vorzugsweise sollten die Anfangs- und Endkonturpunkte aber einen solchen Abstand haben, daß während des Vollschnitts ausreichende mechanische Festigkeit und elektrische Kontaktierung gewährleistet bleiben. Selbstverständlich ist es aber auch möglich, den Anfangskonturpunkt und den Konturendpunkt auf denselben Konturpunkt festzulegen, wobei dann allerdings schon während des ersten Schnitts ein ausreichender mechanischer Halt und elektrische Kontaktierung für das Formteil 20 gewährleistet sein müssen oder der Schnitt bereits nach einem einzigen Durchlauf beendet ist.

Nach Durchführung des Vollschnitts gemäß Figur 4 wird anschließend der Trennschnitt durchgeführt, der in Figur 5 veranschaulicht und mit dem Bezugszeichen 31 bezeichnet ist. Vor Durchführung des Trennschnitts wurden das Substrat 19 und das Formteil 20 elektrisch miteinander kontaktiert. Um zusätzlich zu gewährleisten, daß das Werkstück beim Trennen nicht verrutschen und auch nicht herabfallen kann, wurde das Formteil 20 über Klebepunkte 30 chemisch am Substrat 19 fixiert. Hierbei wird vorzugsweise ein Kleber eingesetzt, der sehr hart aushärtet und damit keine mechanischen Bewegungen des Formteils 20 gegenüber dem Substrat 19 erlaubt. Die Lage, Größe und Anzahl der Klebepunkte 30 wird zur Erzielung ausreichender mechanischer Stabilität geeignet gewählt. Über die Klebepunkte 30 kann gegebenenfalls, bei leitendem Kleber, zugleich auch die elektrische Kontaktierung des Formteils 20 hergestellt werden.

Der Trennschnitt geht, wie der Vollschnitt, zunächst vom Punkt P₅ aus, wobei über das Startloch 22 der Schneiddraht durchgefädelt wurde. Danach wird der Schneiddraht entlang der Linien 23, 24 und 25 bis zum Anfangskonturpunkt P1 geführt, dort dann aber in Gegenrichtung entlang der Linie 32, d.h. entlang des bislang noch nicht geschnittenen Außenkonturteils bis zum Konturendpunkt P₂ geführt. Wie beim Vollschnitt ist auch hier wieder eine Ausfahrt aus der Kontur entlang der Linie 26 über den Punkt P₆ und nachfolgend entlang der Linie 27 bis zum Punkt P₇ vorgesehen. Im Punkt P₇ wird der Draht geschnitten, der Erodiermaschinenkopf entlang der Linie 29 bis zum Startpunkt P₅ bewegt und der Schneidvorgang, nach erneuter Einbringung des Schneiddrahts, wiederholt durchlaufen. Wie auch beim Vollschnitt werden hierbei für die Drahterregung und Drahtbewegung bis zum Punkt P₃ jeweils die anfänglichen Werte eingesetzt, so daß entlang der Linien 23 und 24 somit kein nochmaliger Schneidvorgang stattfindet und der Draht folglich verhältnismäßig rasch vom Punkt P₅ bis zum Punkt P₃ geführt werden kann. Im Punkt P₃ werden dann beim zweiten und jedem eventuellen weiteren Durchlauf die Erregungsparameter des Schneiddrahts sowie dessen Schnittwerte und Feinpositionierung angepaßt, um zu erreichen, daß die Außenkontur exakt mit den gewünschten Werten feingeschnitten, d.h. feinnachbearbeitet wird. Die Einstellbewegungen bei der DrahtFeinpositionierung im Punkt P₃ finden folglich auch hierbei außerhalb der Formteil-Außenkontur statt, so daß diese nicht beeinträchtigt wird. Weiterhin ist es auch möglich, im Punkt P₆ von den zuvor verwendeten Werten wieder auf die anfänglichen Werte zurückzustellen, so daß die Linie 27 immer mit denselben Einstellparametern durchfahren wird, so daß beim zweiten und den nachfolgenden Bewegungsvorgängen entlang der Linie 27 kein Schnitt mehr stattfinden muß.

In gleicher Weise ist es möglich, auch bei komplizierteren Strukturen, bei denen beispielsweise mehrere Formteile während eines Schneidvorgangs aus demselben Substrat herausgearbeitet werden, den Draht in den Zwischenräumen zwischen jeweiligen Außenkonturen mit denselben Positionierungswerten und Erregungswerten wie beim ersten Durchfahren dieser Linien zu bewegen, so daß in den Schnittlinien außerhalb der Außenkonturen kein nochmaliger Schnittvorgang stattfinden muß und diese somit beim zweiten und jedem nachfolgenden Durchfahren mit höherer Geschwindigkeit durchfahren werden können. Hierdurch ergibt sich insgesamt eine erhöhte Bearbeitungsgeschwindigkeit.

## Patentansprüche

1. Drahterodierverfahren zum Heraustrennen eines Formteils aus einem größeren Teil mittels eines in zwei Schritten durchgeführten Schnittvorgangs, der einen gegebenenfalls mehrfach durchfahrenen Vollschnitt und einen Trennschnitt enthält, wobei die Außenkontur des Formteils durch mehrere geometrische Konturelemente bestimmt ist und der Erodierdraht von einem mit Abstand zur Formteil-Außenkontur liegenden Startpunkt zur Außenkontur bewegt wird, dadurch gekennzeichnet, daß der Erodierdraht am Konturübergangspunkt zwischen zwei Konturelementen auf die Außenkonturlinie des herauszutrennenden Formteils eingefahren und an einem anderen Konturübergangspunkt zwischen zwei Konturelementen aus der Außenkonturlinie des herauszutrennenden Formteils ausgefahren wird.

2. Verfahren nach Anspruch 1 oder 2, dadurch gekennzeichnet, daß der Startpunkt und der Endpunkt, bei dem der Erodierdraht eine jeweilige Schnittbewegung beginnt bzw. beendet, mit Abstand zur Außenkonturlinie des Formteils liegen.

3. Verfahren nach einem der vorhergehenden Ansprüche, dadurch gekennzeichnet, daß der Erodierdraht rechtwinklig auf die Außenkonturlinie zubewegt und aus dieser herausbewegt wird.

4. Verfahren nach einem der vorhergehenden Ansprüche, dadurch gekennzeichnet, daß der Erodierdraht auf einer einoder mehrfach, vorzugsweise rechtwinklig, abknickenden Bewegungsbahn vom Startpunkt zur Außenkonturlinie des Formteils geführt wird.

5. Verfahren nach einem der vorhergehenden Ansprüche, dadurch gekennzeichnet, daß die Schnittbahn bei ein- oder mehrfacher Wiederholung des Schnitts an einem Punkt außerhalb der Formteil-Außenkontur, vorzugsweise am letzten Abknickpunkt der Bewegungsbahn vor Erreichen der Außenkontur, korrigiert wird.

6. Verfahren nach einem der vorhergehenden Ansprüche, dadurch gekennzeichnet, daß der Erodierdraht mit erhöhter Geschwindigkeit vom Startpunkt bis zu einem Punkt kurz vor der Außenkonturlinie bewegt und dann auf niedrigere Vorschubgeschwindigkeit umgeschaltet wird.

7. Verfahren nach einem der vorhergehenden Ansprüche, dadurch gekennzeichnet, daß der Erodierdraht nach Ausfahren aus der Außenkonturlinie mit vergrößerter Vorschubgeschwindigkeit bewegt wird.

8. Verfahren nach einem der vorhergehenden Ansprüche, dadurch gekennzeichnet, daß der Erodierdraht auf einer einoder mehrfach, vorzugsweise rechtwinklig, abknickenden Bewegungsbahn aus der Formteil-Außenkonturlinie bis zu einem Endpunkt bewegt wird.

## Claims

1. Travelling-wire electric-discharge machining process for the blanking of a shaped part from a larger part by applying a cutting process performed in two steps comprising a full cut performed, where appropriate, in several passes, and a separating cut, with the outer contour of the shaped part being determined by several geometrical contour elements and the spark-erosion wire being moved to the outer contour from a starting point lying some distance from the shaped part outer contour,
**characterized in that**
the spark-erosion wire is fed inwards at the contour transition point between two contour elements to the outer contour line of the shaped part to be blanked, and is moved away at another contour transition point between two contour elements from the outer contour line of the shaped component to be blanked.

2. Process according to Claim 1, characterised in that the start point and the end point at which the spark-erosion wire begins and ends its respective cutting motions lie at a distance from the outer contour line of the shaped part.

3. Process according to one of the preceding claims, characterised in that the spark-erosion wire is fed and removed at right angles to the outer contour line.

4. Process according to one of the preceding claims, characterised in that, as it approaches the outer contour line of the shaped part from the start point, the spark-erosion wire is guided along a single-bend or multiple-bend traversing path, said bends being preferentially right-angled.

5. Process according to one of the preceding claims, characterised in that the cutting path for a single or multiple repetition of the cut is corrected at a point outside the shaped part outer contour, preferentially at the last bending point of the traversing path before reaching the outer contour.

6. Process according to one of the preceding claims, characterised in that the spark-erosion wire is traversed at elevated speed from the start point to a point just before the outer contour line, and is then switched to a lower traversing speed.

7. Process according to one of the preceding claims, characterised in that the spark-erosion wire, after exiting from the outer contour line, is traversed away at increased speed.

8. Process according to one of the preceding claims, characterised in that the spark-erosion wire is traversed on a single-bend or multiple-bend traversing path from the shaped part outer contour line to an end point, said bends being preferentially right-angled.

## Revendications

1. Procédé par fil d'érosion pour la séparation d'une pièce coulée d'une pièce plus grande au moyen d'un procédé de découpe exécuté en deux étapes, qui comporte une découpe intégrale, le cas échéant répétée et une coupe de séparation, les contours extérieurs de la pièce coulée étant définis par plusieurs éléments de contour géométriques et le fil d'érosion étant déplacé à partir d'un point de départ situé à une distance par rapport au contour extérieur de la pièce coulée vers les contours extérieurs, caractérisé en ce que le fil d'érosion est entré au point de transition des contours entre deux éléments de contour sur la ligne de contour extérieur de la pièce coulée à séparer et est sorti à un autre point de transition des contours entre deux éléments de contour de la ligne de contour extérieure hors de la pièce coulée à séparer.

2. Procédé selon les revendications 1 ou 2, caractérisé en ce que le point de départ et le point d'aboutissement auquel le fil d'érosion commence ou termine un mouvement de découpe se situe à distance de la ligne de contour extérieure de la pièce coulée.

3. Procédé selon l'une quelconque des revendications précédentes, caractérisé en ce que le fil d'érosion s'approche à angle droit et est écarté à angle droit de la ligne de contour extérieure.

4. Procédé selon l'une quelconque des revendications précédentes, caractérisé en ce que le fil d'érosion est de préférence guidé sur un trajectoire courbée à angle droit à partir du point de départ vers la ligne de contour extérieure de la pièce coulée.

5. Procédé selon l'une quelconque des revendications précédentes, caractérisé en ce que la trajectoire de coupe est corrigée par une ou plusieurs répétitions de la coupe en un point extérieur du contour extérieur de la pièce coulée, de préférence au dernier point de courbure de la trajectoire de mouvement avant d'atteindre le contour extérieur.

6. Procédé selon l'une quelconque des revendications précédentes, caractérisé en ce que le fil d'érosion se déplace à une vitesse supérieure du point de départ jusqu'à un point proche de la ligne de contour extérieure et commute ensuite sur une vitesse d'avancement plus faible.

7. Procédé selon l'une quelconque des revendications précédentes, caractérisé en ce que le fil d'érosion, après avoir quitté la ligne de contour extérieure se déplace à une vitesse d'avancement plus élevée.

8. Procédé selon l'une quelconque des revendications précédentes, caractérisé en ce que fil d'érosion est déplacé sur une trajectoire de mouvement à courbure simple ou multiple de préférence à angle droit à partir de la ligne de contour extérieure de la pièce coulée jusqu'à un point terminal.
